(19)

Europäisches
Patentamt
European
Patent Office
Office européen
des brevets

(11) **EP 4 764 424 A1**

(12) **EUROPEAN PATENT APPLICATION**
published in accordance with Art. 153(4) EPC

(43) Date of publication:
**24.06.2026 Bulletin 2026/26**

(21) Application number: **24919345.9**

(22) Date of filing: **26.01.2024**

(51) International Patent Classification (IPC):
***G01F 1/84*** *(2006.01)*

(86) International application number:
**PCT/CN2024/074133**

(87) International publication number:
**WO 2025/156236 (31.07.2025 Gazette 2025/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.01.2024 CN 202410087846**

(71) Applicants:
• **Wemetro Technologies (Jiangsu) Co., Ltd.
Yixing, Jiangsu 214200 (CN)**

• **Walsn Limited
Canterbury, Kent CT2 7FG (GB)**

(72) Inventors:
• **WANG, Tao
Langfang, Hebei 065000 (CN)**
• **MA, Chunli
Langfang, Hebei 065000 (CN)**

(74) Representative: **Porta & Consulenti Associati
S.p.A.
Via Winckelmann, 1
20146 Milano (IT)**

(54) **FLOWMETER AND FLOW MEASUREMENT TUBE**

(57)    A flow measurement tube (100), comprising an inlet tube (1), a middle tube (2), and an outlet tube (3) which are communicated in sequence, wherein a height difference exists between the axis of the middle tube (2) and the axis of the inlet tube (1). The inlet tube (1) and the outlet tube (3) of the flow measurement tube (100) are straight tubes, and a height difference exists between the middle tube (2) and each straight tube, that is, the flow measurement tube (100) is bent; when the flow measurement tube (100) is applied to flow measurement, the frequencies of a working mode and an orthogonal mode are different, thereby avoiding affecting the flow measurement; meanwhile, since the flow measurement tube (100) is bent, the rigidity of the flow measurement tube (100) is reduced, thereby facilitating improving the signal sensitivity caused by the flow; in addition, compared with a single straight tube, the constraints at both ends of the flow measurement tube (100) are reduced, and the anti-stress interference capability is improved. Also provided is a flowmeter (200) comprising the flow measurement tube (100), wherein there is at least one flow measurement tube (100). By adopting the flow measurement tube (100), the measurement performance of the flowmeter (200) can be effectively improved.

FIG. 2

## Description

## TECHNICAL FIELD

The present disclosure relates to the technical field of flow measuring equipment and surrounding supporting facilities thereof, in particular to a flowmeter and a flow measuring tube.

## BACKGROUND

The Coriolis flowmeter is a mass flow measuring device based on Coriolis principle, which can also measure the density of a medium. According to different flow tube types, the Coriolis flowmeters are divided into U-type, Q-type, V-type and straight-tube type and other types of Coriolis flowmeters. Wherein, straight-tube Coriolis flowmeter sensors are widely used because of unique compact structure, less pressure loss, self-emptying performance and many other advantages. However, due to the tube type, the shortcomings of the straight-tube Coriolis flowmeter are also very obvious, such as orthogonal modal interference, low sensitivity of flow measurement, and ease to be affected by stress. These shortcomings also limit the further development of the straight-tube Coriolis flowmeter.

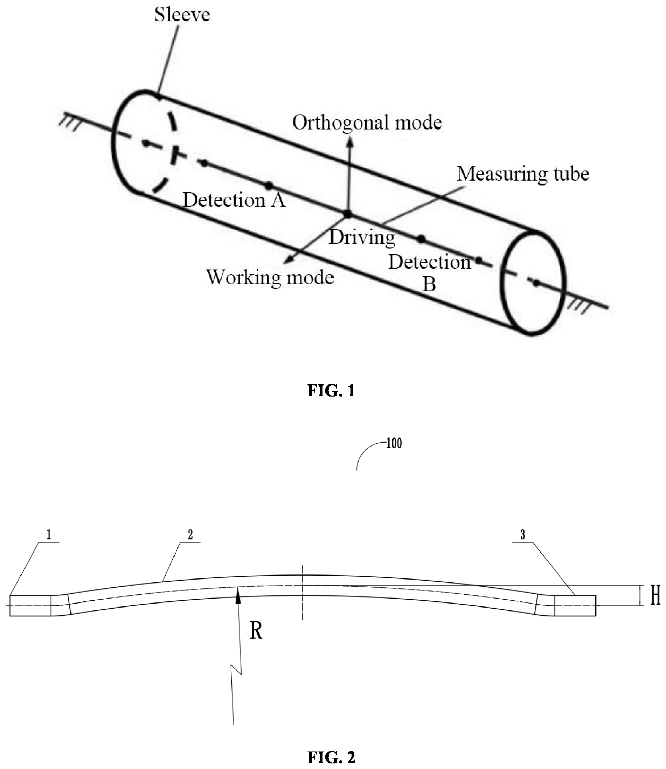

The traditional straight-tube mass flowmeter is inevitably affected by Orthogonal modes. As shown in FIG. 1, because the frequencies of the orthogonal mode and the working mode of the straight-tube flowmeter are almost the same, which has a very serious impact on the performance of the flowmeter. In the design process of the straight-tube mass flowmeter, designers often change the orthogonal mode by means of additional mechanisms to make the straight-tube mass flowmeter get far away from the working frequency, such as, by changing the structure of gusset plate and adding spring devices, which lead to the complicated structure of the straight-tube flowmeter and affects the applicability. Because the rigidity of the straight tube is higher than that of an elbow tube, the signal caused by the flow rate of straight-tube mass flowmeter is usually weak, and the measurement sensitivity of the flowmeter is reduced. In addition, when the external temperature or medium temperature changes suddenly, the thermal expansion and contraction of the straight tube are constrained by both ends, and stress will be generated inside the tube, thereby changing the rigidity of the tube and affecting the measurement accuracy.

Therefore, an urgent problem to be solved by those skilled in the art is how to change the current situation that the measurement performance of the flowmeter is low in the prior art.

## SUMMARY

The present disclosure aims to provide a flowmeter and a flow measuring tube to solve the problems in the prior art and improve the measurement performance of the flowmeter.

In order to achieve the purpose, the present disclosure provides the following scheme. The present disclosure provides a flow measuring tube including following elements being in communication in sequence:

> an inlet tube, which is a straight tube;
> an intermediate tube, a height difference H is provided between an axis of the intermediate tube and an axis of the inlet tube; and
> an outlet tube, which is a straight tube and coaxially arranged with the inlet tube.

The flow measuring tube has a diameter of D.

In some embodiments, the intermediate tube includes a body section, an axis of the body section is an arc line or a straight line.

In some embodiments, when the axis of the body section is an arc line, the body section includes multiple the body sections, circle centers of axes of adjacent body sections of the multiple body sections are located on different sides of the axis of the inlet tube.

In some embodiments, when the axis of the body section is an arc line, the axis of the body section has a radius of R, wherein R is greater than 10D.

An angle a is formed between a tangent line passing through an intersection of the axis of the body section and the axis of the inlet tube and the axis of the inlet tube, wherein a is smaller than or equal to 15°.

In some embodiments, the intermediate tube further includes two transition tube sections, axes of the transition tube sections are curve lines, and the inlet tube and the outlet tube are in communication with the body section by the transition tube sections, respectively.

In some embodiments, the transition tube sections each include multiple transition arc sections, and circle centers of axes of adjacent transition arc sections of the multiple transition arc sections are located on different sides of the axis of the inlet tube.

In some embodiments, the intermediate tube further includes two inclined tube sections. The inclined tube sections are straight tubes, an included angle is formed between an axis of each of the inclined tube sections and the axis of the inlet tube, and the inclined tube sections are located between respective transition tube sections and the body section.

In some embodiments,

$$\frac{H}{D} < 1$$

.

The present disclosure also provides a flowmeter including at least one above-described flow measuring tube.

In some embodiments, the flowmeter further includes a sleeve, a sensor and a driver, wherein the flow measuring tube, the sensor and the driver are all arranged in the sleeve, wherein the sensor and the driver are both arranged on the flow measuring tube, and wherein the sleeve has an inner diameter of 2R1,

$$0 < H < R1 - \frac{D}{2}$$

Compared with the prior art, the present disclosure has the following technical effects.

The flow measuring tube in the present disclosure includes straight tubes and an intermediate tube. The inlet tube and the outlet tube are straight tubes. A height difference is provided between the intermediate tube and the straight tubes, that is, the flow measuring tube is flexed. When the flow measuring tube in the present disclosure is applied to flow measurement, the frequencies of the working mode and the orthogonal mode are different, thereby avoiding the flow measurement from affecting. At the same time, because the flow measuring tube is flexed, the rigidity of the flow measuring tube is reduced, so as to improve the signal sensitivity caused by the flow rate. In addition, compared with a single straight tube, the constraints at both ends of the flow measuring tube are reduced, and the stress interference resistance is improved. The present disclosure also provides a flowmeter including the flow measuring tube. The number of the flow measuring tubes is at least one. The measurement performance of the flowmeter can be effectively improved by using the flow measuring tube.

## BRIEF DESCRIPTION OF THE DRAWINGS

To more clearly illustrate the present embodiment of the present disclosure or the technical scheme in the prior art, the following briefly introduces the attached figures to be used in the present embodiment. Apparently, the attached figures in the following description show merely some embodiments of the present disclosure, and those skilled in the art can still derive other drawings from these attached figures without creative efforts.

FIG. 1 is a working scheme diagram of a straight-tube Coriolis flowmeter in the prior art.
FIG. 2 is a structural schematic diagram of a flow measuring tube in the present disclosure.
FIG. 3 is a structural schematic diagram of a body section, having an axis of an arc line, of a flow measuring tube in the present disclosure.
FIG. 4 is a structural schematic diagram of multiple body sections of a flow measuring tube in the present disclosure.
FIG. 5 is a first structural schematic diagram of a body section, having an axis of a straight line, of a flow measuring tube in the present disclosure.
FIG. 6 is a second structural schematic diagram of a body section, having an axis of a straight line, of a flow measuring tube in the present disclosure.
FIG. 7 is a structural schematic diagram of an intermediate tube, including inclined tube sections, of a flow measuring tube in the present disclosure.
FIG. 8 is a graph of relationships between the frequency difference of the orthogonal mode and the working mode of the flow metering tube and H/D.
FIG. 9 is a structural schematic diagram of a flowmeter in the present disclosure.
FIG. 10 is a section view of a flowmeter in the present disclosure.
FIG. 11 is a partial structural schematic diagram of a flowmeter in the present disclosure.
FIG. 12 is a cross-section view taken along an A-A direction in FIG. 11.

Reference signs: 100, flow measuring tube; 200, flowmeter;

1, inlet tube; 2, intermediate tube; 201, body section; 202, transition arc section; 203, inclined tube section; 3, outlet tube; 4, sleeve; 5, sensor; 6, driver; 7, transmitter; 8, connecting flange; 9, diverter; 10, gusset plate;
H, height difference between axis of intermediate tube and axis of inlet tube; D, diameter of flow measuring tube; R, radius of axis of body section; and a, angle between tangent line passing through intersection of axis of body section and axis of inlet tube and axis of inlet tube.

## DETAILED DESCRIPTION OF THE EMBODIMENTS

The following clearly and completely describes the technical scheme in the embodiments of the present disclosure with reference to the embodiments of the present disclosure. Apparently, the described embodiments are merely a part rather than all of the embodiments of the present disclosure. Based on the embodiment in the present disclosure, all other embodiments acquired by the ordinary technical staff in the art under the premise of without contributing creative labor belong to the scope protected by the present disclosure.

The present disclosure aims to provide a flowmeter and a flow measuring tube to solve the problems in the prior art and improve the measurement performance of the flowmeter.

To make the foregoing objective, features and advantages of the present disclosure clearer and more comprehensible, the present disclosure is further described in detail below with reference to the attached figures and specific embodiments.

The present disclosure provides a flow measuring tube 100. The flow measuring tube 100 includes an inlet tube 1, an intermediate tube 2 and an outlet tube 3 which are in communication in sequence. Wherein, the inlet tube 1 is a straight tube. A height difference H is provided between an axis of the intermediate tube 2 and an axis of the inlet tube 1. The outlet tube 3 is a straight tube, and the inlet tube 1 is coaxially arranged with the outlet tube 3. The flow measuring tube 100 has a diameter of D.

The flow measuring tube 100 in the present disclosure includes straight tubes and an intermediate tube 2. The inlet tube 1 and the outlet tube 3 are straight tubes. A height difference is provided between the intermediate tube 2 and the straight tubes, that is, the flow measuring tube 100 is flexed. When the flow measuring tube 100 in the present disclosure is applied to flow measurement, the frequencies of the working mode and the orthogonal mode are different, thereby avoiding the flow measurement from affecting. At the same time, because the flow measuring tube 100 is flexed, the rigidity of the flow measuring tube 100 is reduced, so as to improve the signal sensitivity caused by the flow rate. In addition, compared with a single straight tube, the constraints at both ends of the flow measuring tube 100 are reduced, the stress interference resistance is improved, and the measurement performance of the flowmeter 200 is effectively improved.

Wherein, the intermediate tube 2 includes a body section 201, and an axis of the body section 201 is an arc or a straight line.

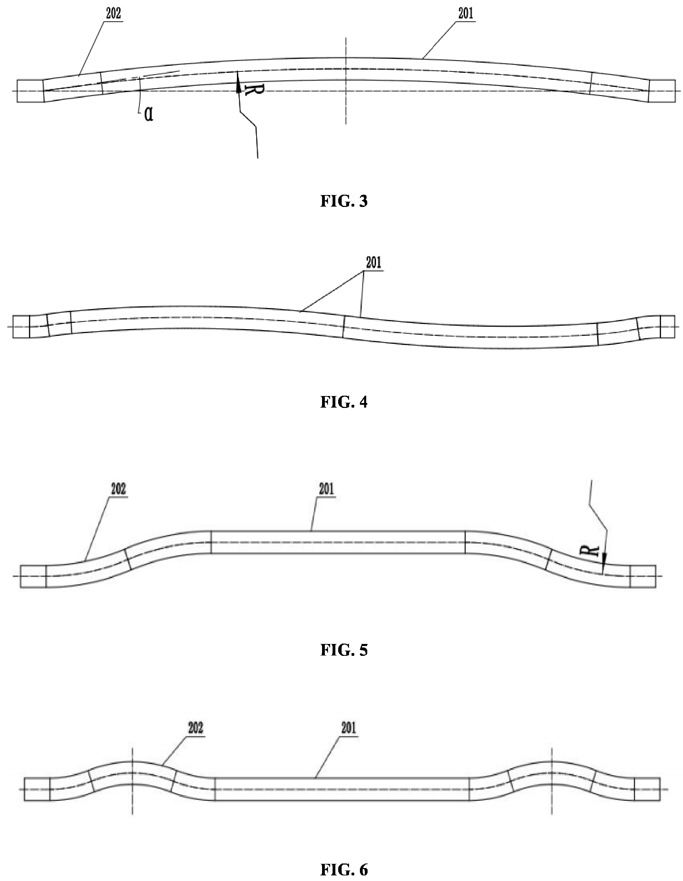

When the axis of the body section 201 is an arc line, the body section includes multiple body sections 201, and circle centers of the axes of the adjacent body sections 201 are located on different sides of the axis of the inlet tube 1. In other specific embodiments of the present disclosure, the number of the body sections 201 can be two. As shown in FIG. 4, circle centers of the two body sections 201 are respectively located on both sides of the axis of the inlet tube 1. While the measurement performance of the flow measuring tube 100 is improved, the space occupation of the flow measuring tube 100 can be reduced, and the adaptability of the flow measuring tube 100 is improved.

In other specific embodiments of the present disclosure, when the axis of the body section 201 is an arc line and has a radius of R, wherein R is greater than 10D. A small curve is introduced for the flow measuring tube 100 by using the body section 201 with a large radius, so as to distinguish the frequencies of the working mode and the orthogonal mode when the flow measuring tube 100 is in operation, and further save the space occupation of the flow measuring tube 100.

Specifically, an angle between a tangent line passing through an intersection of the axis of the body section 201 and the axis of the inlet tube 1 and the axis of the inlet tube 1 is a, see FIG. 3, FIG. 4 and FIG. 7 for details, wherein a is smaller than or equal to 15°. Preferably, a is in the value range of 3° to 12°. In practical application, the bending range of the flow measuring tube 100 can be selected according to specific working conditions to adapt various measurement requirements and reduce the production and manufacturing difficulty of the flow measuring tube 100.

In order to make the communication among the intermediate tube 2, the inlet tube 1 and the outlet tube 3 of the flow measuring tube 100 smooth and avoid normal flow of a fluid inside the flow measuring tube 100 from affecting, the intermediate tube 2 further includes transition tube sections, and axes of the transition tube sections are curve lines. As shown in FIG. 3, the number of the transition tube sections is two. The inlet tube 1 and the outlet tube 3 are in communication with the body section 201 by the transition tube sections, respectively.

In practical application, each transition tube section can include multiple transition arc sections 202, and circle centers of the axes of the adjacent body sections 202 are located on different sides of the axis of the inlet tube 1. A curve is introduced into the flow measuring tube 100, so that the production and manufacturing difficulty of the flow measuring tube 100 is reduced, and the flexibility and adaptability of the flow measuring tube 100 are improved. It will also be noted that when the axis of the body section 201 is a straight line, the axis of each transition arc section 202 has a radius of R, as shown in FIG. 5, so as to ensure that the height difference among the intermediate tube 2, the inlet tube 1 and the outlet tube 3 meets the measurement work requirements. It will be explained here that when each transition tube section includes multiple transition arc sections 202, as shown in FIG. 5 and FIG. 6, an angle between a tangent line passing through an intersection of the axis of the body section 202 and the axis of the inlet tube 1 and the axis of the inlet tube 1 is a, similarly, a is smaller than or equal to 15°. Preferably, a is in a range of 3° to 12°.

In other specific embodiments of the present disclosure, the intermediate tube 2 further includes inclined tube sections 203. Each inclined tube section 203 is a straight tube. An included angle is formed between an axis of each inclined tube section 203 and the axis of the inlet tube 1. The number of the inclined tube sections 203 is two. The inclined tube sections 203 are located between respective transition tube sections and the body section 201. The flow measuring tube 100 in the present disclosure is flexible in structure.

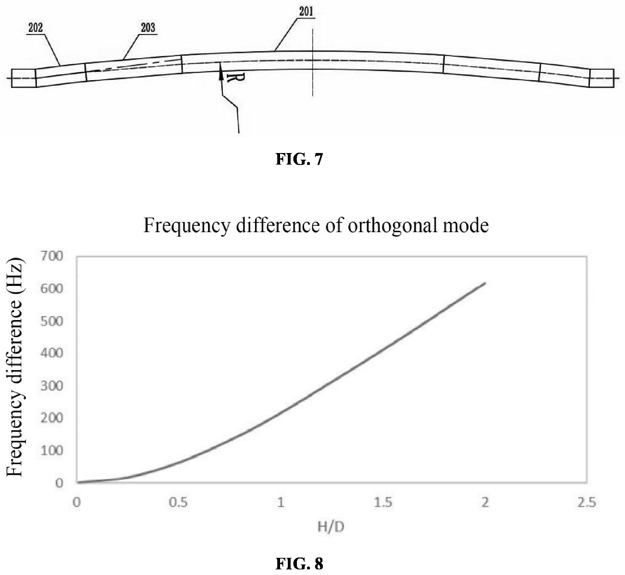

It will also be emphasized that when H/D is greater than 0, the frequency of the orthogonal mode of the flow measuring tube 100 in will be greater and greater than the driving frequency, that is, the modal separation is getting better and better. See FIG. 8 for details, FIG. 8 is a graph of relationships between the frequency difference of the orthogonal mode and the working mode of the flow metering tube 100 and H/D. When H/D is equal to 1, the frequency separation of the orthogonal mode is already greater than 200 Hz. In practical application, an appropriate design point can be selected within the interval of H/D being smaller than 1. When H/D is smaller than 1, it can be seen from finite element simulation results that a virtual straight line can pass through the flow tube. The flow measuring tube 100 of this shape is similar to the existing single straight tube, and is high in clean ability and empty ability and very small in pressure loss.

Further, the present disclosure also provides a flowmeter 200 including the above-described flow measuring tube 100. The number of the flow measuring tubes 100 is at least one. In the present specific embodiment, the flowmeter 200 will be described by taking the flowmeter 200 as an example including two flow measuring tubes 100.

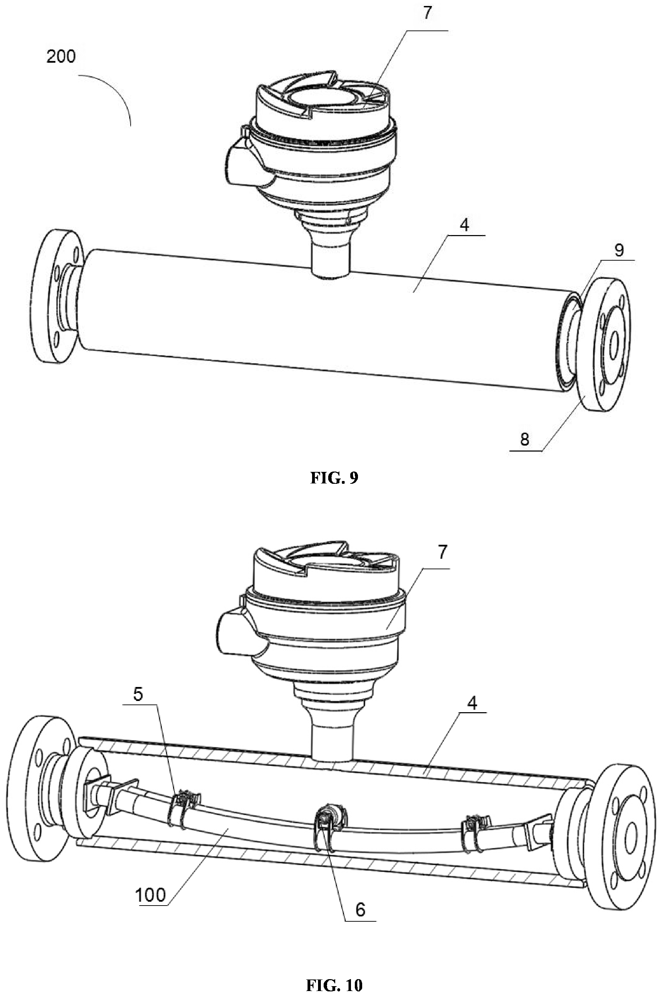

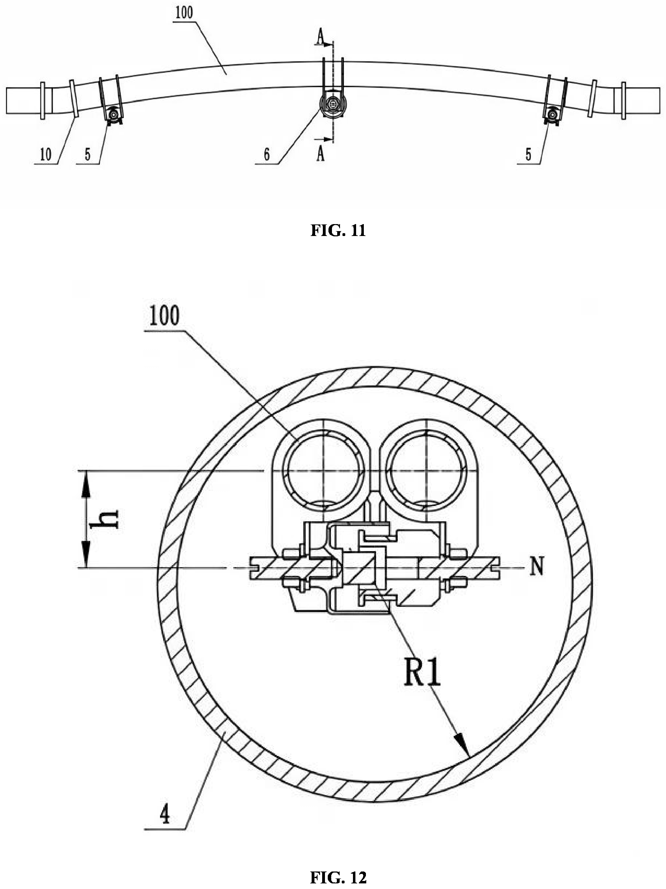

Further, see FIG. 10 for details, the flowmeter 200 further includes a sleeve 4, a sensor 5 and a driver 6. The flow measuring tube 100, the sensor 5 and the driver 6 are all arranged in the sleeve 4. The sensor 5 and the driver 6 are both arranged at the flow measuring tube 100. The sensor 5 and the driver 6 are both electromagnetic mechanisms including an inductance coil and a permanent magnet. The sensor 5 and the driver 6 being the electromagnetic mechanisms are common means of those skilled in the art, and will not be repeated here. It will be emphasized that, with reference to FIG. 12, the sleeve 4 has an inner diameter of 2R1, the flow measuring tube 100 has a diameter of D, h is a distance between the axis of the flow measuring tube 100 and the axis N of the inductance coil of the driver 6, and h meets the following condition:

$$\frac{D}{2} < h < 2 \times R1 - \frac{D}{2}$$

In addition, a transmitter 7 is also provided, and the transmitter 7 keeps a certain distance from the sensor 5. In addition, the sleeve 4 is also connected with a connecting flange 8 to facilitate the connection of the flowmeter 200 with the flow measuring tube 100. A gusset plate 10 can be provided according to actual measurement requirements, and a diverter 9 can also be provided according to specific working conditions to improve the adaptability of the flowmeter 200.

In addition, the height difference H between the axis of the intermediate tube 2 and the axis of inlet tube 1 meets the following condition:

$$0 < H < R1 - \frac{D}{2}$$

It is ensured that the flow measuring tube 100 and other components are successfully assembled and disassembled, and the working reliability of the flowmeter 200 is improved.

According to the flow measuring tube 100 in the present disclosure, compared with a straight tube in the prior art, a very small curve is introduced into the flow measuring tube 100 by the height difference among the intermediate tube 2, the inlet tube 1 and the outlet tube 3, so that the working mode and the orthogonal mode can be distinguished without setting an additional structure. At the same time, the rigidity of a measurement area is reduced, so as to improve the signal sensitivity of flow measurement. Under the conditions of same flow and same size, the time difference of the flowmeter 200 including the flow measuring tube 100 in the present disclosure can be increased by 20% to 30% compared with that of an existing Coriolis flowmeter. The constraints at both ends of the flow measuring tube 100 are reduced, and the stress interference resistance is improved. However, compared with an elbow tube design, the influence of stress is slightly large, so a straight-tube design is also required for stress compensation similarly, which is achieved by installing a stress sensor on the flow measuring tube 100 or installing a temperature sensor on the sleeve 4. According to the flowmeter 200 in the present disclosure, the flow measuring tube 100 is arranged in the sleeve 4. Compared with a V-shaped elbow tube mass flowmeter in the prior art, a protective shell is omitted, so the technological assembly is simplified while the cost is greatly reduced.

Specific examples are used for illustration of the principles and implementation methods of the present disclosure. The description of the above-mentioned embodiments is used to help illustrate the method and its core principles of the present disclosure. In addition, those skilled in the art can make various modifications in terms of specific embodiments and scope of application in accordance with the teachings of the present disclosure. In summary, the contents of this specification should not be understood as the limitation of the present disclosure.

## Claims

1. A flow measuring tube, comprising following elements being in communication in sequence:

   an inlet tube, which is a straight tube;
   an intermediate tube, wherein a height difference H is provided between an axis of the intermediate tube and an axis of the inlet tube; and
   an outlet tube, which is a straight tube and coaxially arranged with the inlet tube; and
   wherein the flow measuring tube has a diameter of D.

2. The flow measuring tube according to claim 1, wherein the intermediate tube comprises a body section, an axis of the body section is an arc line or a straight line.

3. The flow measuring tube according to claim 2, wherein when the axis of the body section is an arc line, the body section comprises a plurality of the body sections, circle centers of axes of adjacent body sections of the plurality of the body sections are located on different sides of the axis of the inlet tube.

4. The flow measuring tube according to claim 2, wherein when the axis of the body section is an arc line, the axis of the body section has a radius of R, wherein R is greater than 10D; and
wherein an angle a is formed between a tangent line passing through an intersection of the axis of the body section and the axis of the inlet tube and the axis of the inlet tube, wherein a is smaller than or equal to 15°.

5. The flow measuring tube according to claim 2, wherein the intermediate tube further comprises two transition tube sections, axes of the transition tube sections are curve lines, and the inlet tube and the outlet tube are in communication with the body section by the transition tube sections, respectively.

6. The flow measuring tube according to claim 5, wherein the transition tube sections each comprise a plurality of transition arc sections, circle centers of axes of adjacent transition arc sections of the plurality of transition arc sections are located on different sides of the axis of the inlet tube.

7. The flow measuring tube according to claim 5, wherein the intermediate tube further comprises two inclined tube sections, the inclined tube sections are straight tubes, an included angle is formed between an axis of each of the inclined tube sections and the axis of the inlet tube, and the inclined tube sections are located between respective transition tube sections and the body section.

8. The flow measuring tube according to any one of claims 1 to 7, wherein

$$\frac{H}{D} < 1$$
.

9. A flowmeter, comprising at least one flow measuring tube according to any one of claims 1 to 8.

10. The flowmeter according to claim 9, further comprising a sleeve, a sensor and a driver, wherein the flow measuring tube, the sensor and the driver are all arranged in the sleeve, wherein the sensor and the driver are both arranged on the flow measuring tube, and wherein the sleeve has an inner diameter of 2R1, and then

$$0 < H < R1 - \frac{D}{2}$$
.

Sleeve

Orthogonal mode

Measuring tube

Detection A

Driving

Working mode

Detection
B

**FIG. 1**

100

1

2

3

H

R

**FIG. 2**

**FIG. 3**

**FIG. 4**

**FIG. 5**

**FIG. 6**

**FIG. 7**

Frequency difference of orthogonal mode

**FIG. 8**

200

7

4

9

8

**FIG. 9**

7

5

4

100

6

**FIG. 10**

**FIG. 11**

**FIG. 12**

## INTERNATIONAL SEARCH REPORT

| International application No. |
| --- |
| **PCT/CN2024/074133** |

| A. | CLASSIFICATION OF SUBJECT MATTER |
| --- | --- |

G01F 1/84(2006.01)i

According to International Patent Classification (IPC) or to both national classification and IPC

| B. | FIELDS SEARCHED |
| --- | --- |

Minimum documentation searched (classification system followed by classification symbols)

IPC: G01F1

Documentation searched other than minimum documentation to the extent that such documents are included in the fields searched

Electronic data base consulted during the international search (name of data base and, where practicable, search terms used)

CNKI, CNTXT, ENTXTC, VEN: 科氏, 科里奥利, 流量计, 弯, 微, 小, 直管, 紧凑, coriolis, flowmeter, micro+, gentle, curve, bend+, straight, pipe, compact

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101156052 A (ROSEMOUNT INC.) 02 April 2008 (2008-04-02) description, pages 3-11, and figures 2-6 | 1-10 |
| X | CN 108180955 A (SHANGHAI YINUO INSTRUMENT CO., LTD.) 19 June 2018 (2018-06-19) description, paragraphs 14-20, and figure 1 | 1-10 |
| X | CN 101858765 A (BEIHANG UNIVERSITY) 13 October 2010 (2010-10-13) description, paragraphs 35-46, and figures 1-6 | 1-10 |
| X | CN 1201904 A (ENDRESS+HAUSER FLOWTEC AG) 16 December 1998 (1998-12-16) description, pages 4-6, and figure 2 | 1-10 |
| X | US 6477902 B1 (YOKOGAWA ELECTRIC CORP.) 12 November 2002 (2002-11-12) description, columns 4-5, and figure 6 | 1-10 |
| X | US 2003131669 A1 (YOKOGAWA ELECTRIC CORP.) 17 July 2003 (2003-07-17) description, paragraphs 140-164, and figures 1 and 6 | 1-10 |
| A | CN 103076053 A (SUN XIAOJUN) 01 May 2013 (2013-05-01) entire document | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 October 2024** | **16 October 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/074133** |

| C. | DOCUMENTS CONSIDERED TO BE RELEVANT | |
|---|---|---|
| Category* | Citation of document, with indication, where appropriate, of the relevant passages | Relevant to claim No. |
| A | CN 104101393 A (BEIJING TIANCHEN BORUI TECHNOLOGY CO., LTD.) 15 October 2014 (2014-10-15)<br>entire document | 1-10 |
| A | US 6006609 A (FLOWTEC AG) 28 December 1999 (1999-12-28)<br>entire document | 1-10 |

Form PCT/ISA/210 (second sheet) (July 2022)

## INTERNATIONAL SEARCH REPORT
### Information on patent family members

International application No.

**PCT/CN2024/074133**

| Patent document cited in search report | | | Publication date (day/month/year) | Patent family member(s) | | | Publication date (day/month/year) |
|---|---|---|---|---|---|---|---|
| CN | 101156052 | A | 02 April 2008 | CA | 2603096 | A1 | 12 October 2006 |
| | | | | CA | 2603096 | C | 26 March 2013 |
| | | | | KR | 20100035185 | A | 02 April 2010 |
| | | | | HK | 1118898 | A1 | 20 February 2009 |
| | | | | KR | 20130022427 | A | 06 March 2013 |
| | | | | AR | 052719 | A1 | 28 March 2007 |
| | | | | JP | 2008536114 | A | 04 September 2008 |
| | | | | AU | 2005330248 | A1 | 12 October 2006 |
| | | | | AU | 2005330248 | B2 | 02 December 2010 |
| | | | | US | 2010083769 | A1 | 08 April 2010 |
| | | | | US | 7802484 | B2 | 28 September 2010 |
| | | | | WO | 2006107297 | A1 | 12 October 2006 |
| | | | | EP | 1869416 | A1 | 26 December 2007 |
| | | | | BRPI | 0520005 | A2 | 14 April 2009 |
| | | | | BRPI | 0520005 | B1 | 24 September 2019 |
| | | | | MX | 2007011990 | A | 10 December 2007 |
| CN | 108180955 | A | 19 June 2018 | None | | | |
| CN | 101858765 | A | 13 October 2010 | None | | | |
| CN | 1201904 | A | 16 December 1998 | DK | 0871017 | T3 | 13 October 2008 |
| | | | | JPH | 10318814 | A | 04 December 1998 |
| | | | | JP | 2872218 | B2 | 17 March 1999 |
| | | | | DE | 59712954 | D1 | 11 September 2008 |
| | | | | EP | 0871017 | A1 | 14 October 1998 |
| | | | | EP | 0871017 | B1 | 30 July 2008 |
| US | 6477902 | B1 | 12 November 2002 | EP | 0905488 | A2 | 31 March 1999 |
| US | 2003131669 | A1 | 17 July 2003 | JP | 2003185482 | A | 03 July 2003 |
| | | | | US | 6782764 | B2 | 31 August 2004 |
| | | | | DE | 1319930 | T1 | 27 November 2003 |
| | | | | EP | 1319930 | A2 | 18 June 2003 |
| CN | 103076053 | A | 01 May 2013 | CA | 2837794 | A1 | 30 June 2014 |
| | | | | CA | 2837794 | C | 21 March 2017 |
| | | | | WO | 2014101729 | A1 | 03 July 2014 |
| | | | | US | 2015323362 | A1 | 12 November 2015 |
| | | | | RU | 2015131468 | A | 09 February 2017 |
| | | | | RU | 2617709 | C2 | 26 April 2017 |
| CN | 104101393 | A | 15 October 2014 | None | | | |
| US | 6006609 | A | 28 December 1999 | JPH | 10185646 | A | 14 July 1998 |
| | | | | JP | 2872205 | B2 | 17 March 1999 |
| | | | | ES | 2135285 | T3 | 16 October 1999 |
| | | | | EP | 0849568 | A1 | 24 June 1998 |
| | | | | EP | 0849568 | B1 | 02 June 1999 |
| | | | | US | 2002117010 | A1 | 29 August 2002 |
| | | | | US | 6647807 | B2 | 18 November 2003 |
| | | | | DK | 0849568 | T3 | 15 November 1999 |
| | | | | US | 6401548 | B1 | 11 June 2002 |
| | | | | DE | 59700185 | D1 | 08 July 1999 |

Form PCT/ISA/210 (patent family annex) (July 2022)